# EUROPÄISCHE PATENTANMELDUNG

(11) **EP 3 025 842 A1**
(43) Veröffentlichungstag der Anmeldung: **01.06.2016**
(21) Anmeldenummer: 15450042.5
(22) Anmeldetag: 24.11.2015
(51) Int. Cl.: B29C 45/28, B29C 45/27

(54) **SPRITZGUSSDÜSE FÜR EIN SPRITZGUSSWERKZEUG**

(30) Priorität: 28.11.2014 AT 8632014
(71) Anmelder: RICO Elastomere Projecting GmbH, 4600 Thalheim bei Wels (AT)
(72) Erfinder: Kornfelder, Gerhard, A-4722 Peuerbach (AT)
(74) Vertreter: Keschmann, Marc

(57) **Zusammenfassung**

Bei einer Spritzgussdüse für ein Spritzgusswerkzeug umfassend einen Düsenkörper (6), der eine Zuführöffnung für ein zu spritzendes Material und einen Austrittskanal (27) aufweist, und eine im Düsenkörper (6) angeordnete, in Längsrichtung zwischen einer Öffnungsstellung und einer Schließstellung axial verschiebbare Nadel (23), wobei die Nadel (23) in ihrem vorderen, dem Austrittskanal (27) des Düsenkörpers (6) benachbarten Ende eine Sitzfläche aufweist, die in der Schließstellung in Anlage an eine Gegenfläche bringbar ist, ist die Nadel (23) im Bereich des vorderen Endes hohl ausgebildet.

## Beschreibung

Die Erfindung betrifft eine Spritzgussdüse für ein Spritzgusswerkzeug umfassend einen Düsenkörper, der eine Zuführöffnung für ein zu spritzendes Material und einen Austrittskanal aufweist, und eine im Düsenkörper angeordnete, in Längsrichtung zwischen einer Öffnungsstellung und einer Schließstellung axial verschiebbare Nadel, wobei die Nadel in ihrem vorderen, dem Austrittskanal des Düsenkörpers benachbarten Ende eine Sitzfläche aufweist, die in der Schließstellung in Anlage an eine Gegenfläche bringbar ist.

Weiteres betrifft die Erfindung ein Spritzgusswerkzeug mit einer als Nadelverschlussdüse ausgebildeten Spritzgussdüse und mit von einer von zwei Formplatten, die ein Formnest umschließen und begrenzen, gebildeten Spritzgussform, wobei der Austrittskanal der Spritzgussdüse in der Öffnungsstellung der Nadel mit dem Formnest in Verbindung steht.

Weiters betrifft die Erfindung eine Nadel für eine Spritzgussdüse der eingangs genannten Art.

Ein derartiges Spritzgusswerkzeug ist beispielsweise aus der AT 513963 A1, AT 5750 U1 oder der EP 818 295 A1 bekannt geworden.

Unvernetzte, aber vernetzbare Polymere, insbesondere Kautschuk, Gummi, Flüssigsilikone und Polysiloxane und andere warmhärtende Werkstoffe werden üblicherweise über Verteilerkanäle in Formnester eingespritzt, wobei diese Werkstoffe während des Einspritzvorganges auf Raumtemperaturniveau oder knapp darüber gehalten werden müssen, damit diese für den Einspritzvorgang ausreichend flüssig bleibt. Ein Erhitzen des Materials auf zu hohe Temperaturen muss vermieden werden, weil das Material sonst auszuhärten beginnt, wobei dieser Vorgang nicht rückgängig gemacht werden kann. Ein Hauptproblem stellt dabei die Temperaturdifferenz zwischen dem Formnest und den Zufuhrkanälen dar. Obwohl die Einspritzdüsen und insbesondere die Düsenspitze mit Hilfe eines Kühlmediums gekühlt werden (sog. Kaltkanaldüsen), besteht die Gefahr, dass es im Angussbereich aufgrund des Wärmeübergangs zu einer Materialverfestigung kommt, wobei die Spritzgussteile nach dem Guss von den Enden der auf diese Art und Weise entstehenden Angussstangen abgetrennt werden müssen, was zu Oberflächenbeschädigungen bzw. zur Gradbildung am Ansatzbereich führen kann. Bei offenen Kaltkanalsystemen kann der Wärmeübergang auf die Spritzgussdüse durch eine gute Kühlung der Düse und durch eine Minimierung der Anlagefläche an der Spitze der Düse reduziert werden.

Nadelverschlussdüsen weisen gegenüber offenen Düsen den Vorteil auf, dass durch das Verschließen der Düsenöffnung mit Hilfe der Nadel eine Angussminimierung erreicht werden kann. Der Antrieb der Nadel kann hierbei als pneumatischer oder hydraulischer Antrieb oder auch als elektrischer Antrieb ausgebildet sein. Nadelverschlussdüsen weisen weiters den Vorteil eines kontrollierten Druckaufbaues in der Kavität auf. Durch den Nadelverschluss ist es möglich, das flüssige Material durch eine lediglich sehr kurze Eintrittsbohrung in das Formnest einzuspritzen. Durch die Düsennadel wird das in das Formnest eingespritzte Material von dem in der Einspritzdüse befindlichen Material getrennt, wie dies in der AT 5750 U1 gezeigt ist. Ein Problem bei der Ausbildung gemäß der AT 5750 U1 ist der Umstand, dass die Nadelspitze im geschlossenen Zustand der Düse in der heißen Formplatte, nämlich in der Eintrittsbohrung, sitzt, wodurch es zu einer unerwünschten Wärmeübertragung auf die Nadel kommt.

Die angestrebte thermische Trennung zwischen der Formplatte und der Kaltkanaldüse wird bei Nadelverschlussdüsen erschwert, weil es aufgrund der Baugröße oftmals keine Möglichkeit zur Kühlung der Nadel gibt. Aufgrund der großen Anlagefläche am Konus der Nadel zur Formplatte kommt es zu einem erheblichen Wärmeübergang in die Düsenspitze und Maßnahmen zur thermischen Trennung müssen nach weiter hinten in die Kaltkanaldüse verlagert werden. Dadurch kommt es bei Kaltkanaldüsen bei kurzen Stillständen zur Vulkanisierung des Materials im vordersten Bereich der Kaltkanaldüse.

Bei Standardmaterialien stellt dies insofern ein Problem dar, weil das vulkanisierte Material nach 3-5 Spritzzyklen aus der Kaltkanaldüse gespült wird, wodurch sich ein großer Anteil an Ausschussteilen ergibt. Noch ausgeprägter ist das Problem beim Spritzen von Teilen aus sogenannten selbsthaftenden Materialien. Im diese Materialien ist ein Haftvermittler eingearbeitet, damit diese auf andere Teile (z.B. Kunststoff, Stahl, usw.) aufgespritzt werden können und dann eine chemische Verbindung eingehen. Dieses Haftungssystem wird bei der Vulkanisation des Materials aktiv. Kommt es zu einer Vulkanisation in der Kaltkanaldüse, haftet das Material an der Kaltkanaldüse bzw. an der Nadel und kann nicht mehr ausgespült werden.

Die oben beschriebenen Probleme sind analog auch bei Heißkanaldüsen zu beobachten. Hier ist umgekehrt der Wärmeübergang von der Düsenspitze in die Formplatte ein Nachteil, weil die Temperatur an der Düsenspitze dann so weit absinken kann, dass das kaltverfestigende Material in der Düsenspitze härtet.

Die vorliegende Erfindung zielt daher darauf ab, eine Nadelverschluss-Spritzgussdüse und ein Spritzgusswerkzeug zu schaffen, bei denen eine bessere Wärmetrennung zwischen der Formplatte und der Düse, insbesondere der Düsenspitze, gelingt. Weiters zielt die Erfindung darauf ab, die Vulkanisationszeit zu verkürzen und dementsprechend die Taktzeiten zu verringern. Weiters zielt die Erfindung darauf ab, die Anzahl der Ausschussteile zu verringern.

Zur Lösung dieser Aufgaben ist die Spritzgussdüse der eingangs genannten Art gemäß einem ersten Aspekt der Erfindung im Wesentlichen dahingehend weitergebildet, dass die Nadel im Bereich des vorderen Endes hohl ausgebildet ist. Der Hohlraum verringert hierbei den für die Wärmeleitung in diesem Bereich zur Verfügung stehenden Querschnitt der Nadel. Dadurch wird die Wärmetrennung zwischen dem Formnest bzw. der Formplatte und der Düsenspitze verbessert und der Übergang zwischen dem heißen und dem gekühlten Bereich wird möglichst nahe an das Formnest verlagert.

Bevorzugt ist hierbei vorgesehen, dass der in dem vorderen Bereich ausgebildete Hohlraum mit einem Fluid, insbesondere Luft gefüllt ist. Die im Hohlraum eingeschlossene Luft wirkt dabei als zusätzlicher Wärmeisolator.

Eine besonders gute Wärmetrennung gelingt hierbei dadurch, dass die radiale Erstreckung des Hohlraums möglichst groß gewählt wird. Insbesondere ist vorgesehen, dass der Hohlraum zylindrisch mit einem Durchmesser ausgebildet ist, der wenigstens 25%, bevorzugt wenigstens 50% des Außendurchmessers der Nadel entspricht.

Bevorzugt ist weiters vorgesehen, dass die Nadel den Austrittskanal der Spritzgussdüse unter Ausbildung wenigstens eines Durchtrittsquerschnitts für das zu spritzende Material durchsetzt und der Hohlraum bevorzugt eine Längsausdehnung aufweist, die sich über wenigstens 25%, bevorzugt wenigstens 50% der Länge des den Austrittskanal durchsetzenden Abschnitts der Nadel erstreckt.

Die Ausbildung des Hohlraums gelingt konstruktiv besonders einfach, wenn der den Hohlraum aufweisende vordere Endbereich der Nadel als gesonderter Bauteil ausgebildet ist, der mit einem Hauptkörper der Nadel verbunden, insbesondere verschweißt ist. Der Hauptkörper weist zu diesem Zweck bevorzugt einen Zentrieransatz auf, auf welchen der gesonderte Bauteil aufgesetzt ist.

Um die Wärmeübertragung weiter zu minimieren, sieht eine bevorzugte Weiterbildung vor, dass der gesonderte Bauteil aus einem Material mit schlechter Wärmeleitfähigkeit besteht. Bevorzugt besteht der gesonderte Bauteil aus einem Material, insbesondere einer Metalllegierung, mit einer Wärmeleitfähigkeit von < 45 W/m.K, insbesondere < 35 W/m.K, wie z.B. Titan, Pulverstähle oder Werkzeugstähle.

Die erfindungsgemäße Ausbildung bewirkt bei einer Kaltkanaldüse, dass eine Vulkanisation in der Kaltkanaldüse auch nach langen Unterbrechungen oder in der Abkühlphase der Formplatte verhindert wird. Dadurch wird auch eine Verarbeitung von selbsthaftenden Materialien möglich. Bei Standardmaterialien ergibt sich eine Reduzierung der Ausschussteile. Weiters können bei einer Serie von aufeinanderfolgenden Spritzvorgängen kürzere Zykluszeiten gewählt werden, wobei höhere Temperaturen in der Formplatte ermöglicht werden.

Die Erfindung kann auch bei Heißkanaldüsen für Thermoplaste eingesetzt werden. Hier sind die gleichen Vorteile aber im umgekehrten Sinn zu beobachten, wobei die Heißkanaldüse bevorzugt in einem Temperaturbereich von ca. 250-400°C und die Formplatte in einem Temperaturbereich von ca. 50-150°C gehalten werden kann.

Gemäß einem weiteren Aspekt der Erfindung wird die zugrundeliegende Aufgabe durch ein Spritzgusswerkzeug gelöst, welches eine als Nadelverschlussdüse ausgebildete Spritzgussdüse gemäß dem ersten Aspekt der Erfindung und eine von zwei Formplatten, die ein Formnest umschließen und begrenzen, gebildete Spritzgussform umfasst, wobei der Austrittskanal der Spritzgussdüse in der Öffnungsstellung der Nadel mit dem Formnest in Verbindung steht.

Eine weitere Verbesserung der Wärmetrennung zwischen der Formplatte und der Spritzgussdüse gelingt in bevorzugter Weise dadurch, dass die Spritzgussdüse in der Schließstellung der Nadel mit einer den Austrittskanal umgebenden Vorkammer in offener Verbindung steht. Durch die offene Verbindung der Spritzgussdüse mit der den Austrittskanal umgebenden Vorkammer gelangt das einzuspritzende Material in die Vorkammer, welche die Funktion der Wärmeisolation bzw. Reduktion der Wärmeübertragung von der Temperatur des Formnestes auf das in der Einspritzdüse enthaltene Material übernimmt. Es wird somit die Isolationseigenschaft von warmverfestigenden bzw. vulkanisierenden, elastomeren Materialien unmittelbar dafür ausgenützt, dass eine Wärmeübertragung vom Formnest bzw. der Formplatte auf die Einspritzdüse verhindert wird. Aufgrund der hierdurch erzielten Wärmetrennung sind höhere Formtemperaturen möglich als beim Stand der Technik, was wiederum zu kürzeren Vulkanisationszeiten und damit verbunden zu Kosteneinsparungen führt.

Dabei ist es vorteilhaft, wenn die Nadel in der Schließstellung lediglich am heißen Bereich anliegt, d.h. auf der vorzugsweise konischen Sitzfläche der in der Formplatte ausgebildeten Eintrittsbohrung. Die Ausbildung ist in diesem Zusammenhang bevorzugt derart weitergebildet, dass das vordere Ende der Nadel und eine die Spritzgussdüse mit dem Formnest verbindende Eintrittsbohrung in der Schließstellung der Nadel miteinander zusammenwirkende Sitzflächen aufweisen.

Damit aufgrund des Nadelhubs beim Verschließen der Düse keine Zusatzmenge an einzuspritzendem Material in das Formnest eingebracht wird, ist die Ausbildung bevorzugt derart weitergebildet, dass die miteinander zusammenwirkenden Sitzflächen der Nadel und der Eintrittsbohrung konisch ausgebildet sind. Wenn, wie dies einer weiteren bevorzugten Ausbildung entspricht, die bevorzugt zum Formnest hin konisch zulaufende Eintrittsbohrung lediglich in der Formplatte ausgebildet ist, wird in einfacher Weise sichergestellt, dass die Nadel tatsächlich nur im heißen Bereich anliegt.

Wie bereits erwähnt, verschließt die Nadel in der Schließstellung bevorzugt lediglich die in der Formplatte ausgebildete Eintrittsbohrung. Der Austrittskanal der Spritzgussdüse selbst wird jedoch in der Schließstellung der Nadel nicht verschlossen, da die Spritzgussdüse erfindungsgemäß mit einer den Austrittskanal umgebenden Vorkammer in offener Verbindung steht. Eine besonders vorteilhafte Bauweise sieht in diesem Zusammenhang vor, dass die Nadel den Austrittskanal der Spritzgussdüse unter Ausbildung eines Ringspaltes durchsetzt. Der Ringspalt steht dabei unmittelbar mit der Vorkammer in offener Verbindung.

Bevorzugt ist das Spritzgusswerkzeug zur Verwendung mit warmverfestigenden oder vulkanisierenden elastomeren Materialien ausgebildet und weist eine die Spritzgussdüse zumindest teilweise umgebende Kühlvorrichtung, insbesondere Kühlkanäle auf.

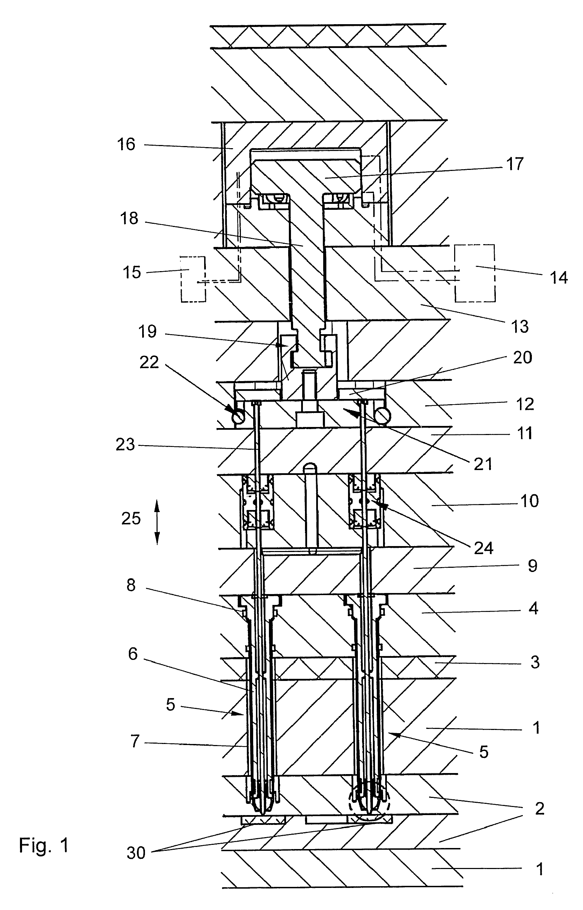

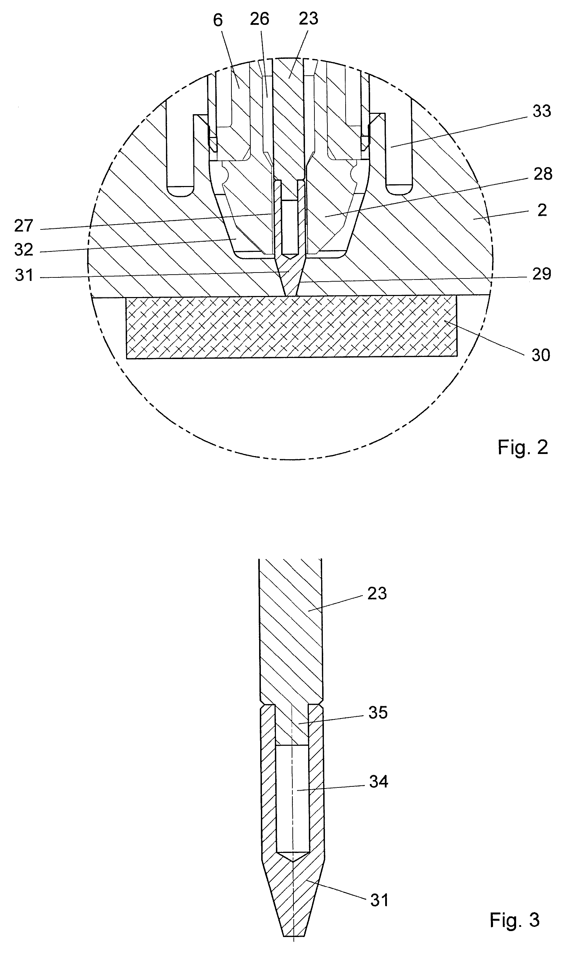

Die Erfindung wird nachfolgend anhand eines in der Zeichnung schematisch dargestellten Ausführungsbeispiels näher erläutert. In dieser zeigen Fig. 1 eine Querschnittsansicht eines erfindungsgemäßen Spritzgusswerkzeuges mit zwei Kaltkanaldüsen, Fig. 2 eine Detailansicht im Bereich der Düsenspitze der Fig. 1 und Fig. 3 eine Detailansicht der Nadel im Bereich ihres vorderen Endes.

In Fig. 1 sind mit 1 Heizplatten bezeichnet, welche im Betrieb üblicherweise auf Temperaturen von etwa 200°C gehalten sind. An die Heizplatten 1 anschließend sind Formplatten 2 vorgesehen. Auch diese Formplatten 2 befinden sich im Betrieb auf Temperaturen von etwa 200°C. Zur Isolation ist in der Folge eine Isolierplatte 3 angeordnet, an welche die Düsenhalteplatte 4 angeschlossen ist. Die Düsenhalteplatte 4 befindet sich auf Kühltemperatur und damit auf einer Temperatur von ungefähr 20°C. In der Düsenhalteplatte 4 sind Kaltkanaldüsen 5 eingesetzt, deren Düsenkörper mit 6 bezeichnet ist. Der Düsenkörper 6 wird von einem Düsenmantel 7 umgeben, in dem nicht näher dargestellte Kühlkanäle angeordnet sind, um die Kaltkanaldüse auf eine Temperatur von z.B. 20°C zu kühlen. Die Dichtung der Kaltkanaldüse 5 relativ zur Düsenhalteplatte 4 wird durch O-Ringdichtungen 8 gewährleistet. Die Zufuhr des elastomeren Materials zur Düse 5 erfolgt über die Verteilerplatte 9. Mit 10 ist eine Distanzplatte bezeichnet, an welche eine Zwischenplatte 11 anschließt. An die Zwischenplatte 11 wiederum schließt die Nadelführungsplatte 12 an.

Die Antriebsplatte ist mit 13 bezeichnet und trägt einen hydraulischen Antrieb in Form eines in einem Zylinder 16 verschieblich geführten Antriebskolbens 17. Der Anschluss für das Hydraulikmedium ist mit 14 und der elektrische Anschluss des Antriebs ist mit 15 bezeichnet. Der Antrieb kann alternativ aber auch pneumatisch oder elektrisch erfolgen. Der Antriebskolben 17 weist einen Bolzen 18 auf, der an seinem Ende eine mit der Nadelhalterung 20 zusammenwirkende Kupplung 19 aufweist. Die Nadelhalterung 20 wiederum trägt ein Nadelführungselement 21, das mittels eines Kugellagers 22 in der Ausnehmung der Nadelführungsplatte 12 verschieblich geführt ist. Die Nadel 23 ist in dem Nadelführungselement 21 gehalten und durchsetzt das Dichtpaket 24. Eine Verschiebung des Antriebskolbens 17 bewirkt eine Verschiebung der Nadelführung 21 gemeinsam mit der Nadel 23 in Richtung des Doppelpfeils 25.

Mit Hilfe des hydraulischen Antriebs kann die Nadel 23 somit zwischen einer Öffnungsstellung, in welcher der Materialfluss aus dem Düsenkanal 26 über den Austrittskanal 27 der Düsenspitze 28 und die in der Formplatte 2 ausgebildete Eintrittsbohrung 29 in das Formnest 30 freigegeben ist, und einer Schließstellung, in der die Eintrittsbohrung 29 verschlossen ist, verschoben werden (Fig. 2).

In der Detailansicht gemäß Fig.2 ist ersichtlich, dass die Nadel 23 eine konische Nadelspitze 31 aufweist, die in der Schließstellung lediglich in der Formplatte 2 sitzt und dort die in der Formplatte 2 ausgebildete Eintrittsbohrung 29 verschließt, über welche der Austrittskanal 27 mit dem Formnest 30 verbunden ist. Die Düse 5 steht in der Schließstellung der Nadel 23 über den Austrittskanal 27 mit einer Vorkammer 32 in offener Verbindung, sodass die Vorkammer 32 im Betrieb mit dem elastomeren Material gefüllt ist. Die Verbindung erfolgt dabei über einen schmalen Spalt zwischen der austrittsseitigen Öffnung des Austrittskanals 27 und dem Rand der Eintrittsbohrung 29. Durch das Vorsehen der Vorkammer 32 wird einerseits die Kontaktfläche zwischen der Nadelspitze 31 und der Formplatte 2 minimiert, sodass der Wärmeeintrag auf die Nadelspitze 31 reduziert werden kann. Andererseits führt die offene Verbindung zwischen dem Austrittskanal 27 und der Vorkammer 32 dazu, dass die Nadel 23 nicht den Austrittskanal 27 verschließen muss, sondern lediglich die Eintrittsbohrung 29, sodass die Nadelspitze 31 nur mit der heißen Formplatte 2 in Kontakt steht.

Der den Düsenkörper 6 umgebende Kühlkanal ist mit 33 angedeutet.

In der Detaildarstellung gemäß Fig. 3 ist ersichtlich, dass die Nadelspitze 31 als vom Hauptkörper der Nadel 23 gesonderter Bauteil ausgebildet ist, in dem ein zylindrischer Hohlraum 34 vorgesehen ist. Die Verbindung der Düsenspitze 31 mit dem Hauptkörper der Nadel 23 erfolgt mittels eines Zentrieransatzes 35, auf den die Nadelspitze 31 aufgesetzt ist. Die Verbindung kann beispielsweise durch Schweißen, insbesondere Laserschweißen hergestellt werden.

## Patentansprüche

1. Spritzgussdüse für ein Spritzgusswerkzeug umfassend einen Düsenkörper, der eine Zuführöffnung für ein zu spritzendes Material und einen Austrittskanal aufweist, und eine im Düsenkörper angeordnete, in Längsrichtung zwischen einer Öffnungsstellung und einer Schließstellung axial verschiebbare Nadel, wobei die Nadel in ihrem vorderen, dem Austrittskanal des Düsenkörpers benachbarten Ende eine Sitzfläche aufweist, die in der Schließstellung in Anlage an eine Gegenfläche bringbar ist, **dadurch gekennzeichnet, dass** die Nadel (23) im Bereich des vorderen Endes hohl ausgebildet ist.

2. Spritzgussdüse nach Anspruch 1, **dadurch gekennzeichnet, dass** der in dem vorderen Bereich ausgebildete Hohlraum (34) mit einem Fluid, insbesondere Luft gefüllt ist.

3. Spritzgussdüse nach Anspruch 1 oder 2, **dadurch gekennzeichnet, dass** die Nadel (23) den Austrittskanal (27) der Spritzgussdüse unter Ausbildung wenigstens eines Durchtrittsquerschnitts für das zu spritzende Material durchsetzt und der Hohlraum (23) bevorzugt eine Längsausdehnung aufweist, die sich über wenigstens 25%, bevorzugt wenigstens 50% der Länge des den Austrittskanal (27) durchsetzenden Abschnitts der Nadel (23) erstreckt.

4. Spritzgussdüse nach Anspruch 1, 2 oder 3, **dadurch gekennzeichnet, dass** der den Hohlraum (34) aufweisende vordere Endbereich der Nadel (23) als gesonderter Bauteil (31) ausgebildet ist, der mit einem Hauptkörper der Nadel (23) verbunden, insbesondere verschweißt ist.

5. Spritzgussdüse nach Anspruch 4, **dadurch gekennzeichnet, dass** der gesonderte Bauteil aus einem Material, insbesondere einer Metalllegierung, mit einer Wärmeleitfähigkeit von < 45 W/m.K, insbesondere < 35 W/m.K, besteht.

6. Spritzgussdüse nach einem der Ansprüche 1 bis 5, **dadurch gekennzeichnet, dass** der Hohlraum (34) zylindrisch mit einem Durchmesser ausgebildet ist, der wenigstens 25%, bevorzugt wenigstens 50% des Außendurchmessers der Nadel (23) entspricht.

7. Spritzgussdüse nach einem der Ansprüche 1 bis 6, **dadurch gekennzeichnet, dass** die Sitzfläche der Nadel (23) zur Nadelspitze hin konisch zulaufend ausgebildet ist.

8. Spritzgusswerkzeug mit einer als Nadelverschlussdüse ausgebildeten Spritzgussdüse nach einem der Ansprüche 1 bis 7 und mit einer von zwei Formplatten (2), die ein Formnest (30) umschließen und begrenzen, gebildeten Spritzgussform, wobei der Austrittskanal (27) der Spritzgussdüse in der Öffnungsstellung der Nadel (23) mit dem Formnest (30) in Verbindung steht.

9. Spritzgusswerkzeug nach Anspruch 8, **dadurch gekennzeichnet, dass** die Spritzgussdüse in der Schließstellung der Nadel (23) mit einer den Austrittskanal (27) umgebenden Vorkammer (32) in offener Verbindung steht.

10. Spritzgusswerkzeug nach Anspruch 9, **dadurch gekennzeichnet, dass** die Vorkammer (32) in der Öffnungsstellung der Nadel (23) mit dem Formnest (30) in offener Verbindung steht.

11. Spritzgusswerkzeug nach Anspruch 8, 9 oder 10, **dadurch gekennzeichnet, dass** die Sitzfläche der Nadel (23) in der Schließstellung mit einer Gegenfläche zusammenwirkt, die an einer die Spritzgussdüse mit dem Formnest (30) verbindenden Eintrittsbohrung (29) ausgebildet ist, wobei die Eintrittsbohrung (29) vorzugsweise in der Formplatte (2) ausgebildet ist.

12. Spritzgusswerkzeug nach einem der Ansprüche 8 bis 11, **dadurch gekennzeichnet, dass** das Spritzgusswerkzeug zur Verwendung mit warmverfestigenden oder vulkanisierenden elastomeren Materialien ausgebildet ist und eine die Spritzgussdüse zumindest teileweise umgebende Kühlvorrichtung, insbesondere Kühlkanäle (33) aufweist.

13. Nadel für eine Spritzgussdüse nach einem der Ansprüche 1 bis 7, **dadurch gekennzeichnet, dass** die Nadel (23) im Bereich des vorderen Endes hohl ausgebildet ist.
